# EUROPEAN PATENT SPECIFICATION

(11) **EP 1 723 728 B1**
(45) Date of publication and mention of the grant of the patent: **16.10.2019**
(21) Application number: 05723444.5
(22) Date of filing: 22.02.2005
(51) Int. Cl.: H04B 1/38, H04B 1/40, H04B 1/10

(54) **SCALABLE, COOPERATIVE, WIRELESS NETWORKING FOR MOBILE CONNECTIVITY**
SKALIERBARE KOOPERATIVE DRAHTLOSE VERNETZUNG FÜR MOBILE KONNEKTIVITÄT
RESEAUTAGE SANS FIL ECHELONNABLE ET COOPERATIF DESTINE A UNE CONNECTIVITE MOBILE

(30) Priority: 19.02.2004 US 546340 P
(43) Date of publication of application: 22.11.2006
(73) Proprietor: Texas Instruments Incorporated, Dallas, Texas 75265-5475 (US)
(72) Inventor: BATRA, Anuj, Dallas, TX 75204 (US); BELK, Nathan, R., Lucas, TX 75002 (US); DABAK, Anand, G., Plano, TX 75025 (US); DIRENZO, Micahel, T., Coppell, TX 75019 (US); GOEL, Manish, Plano, TX 75024 (US); HO, Jin, Meng, Plano, TX 75025 (US); HOSUR, Srinath, Plano, TX 75025 (US); LU, Xiaolin, Plano, TX 75024 (US); MAGEE, David, P., Plano, TX 75025 (US); SHAVER, Donald, P., Dallas, TX 75248 (US); YAMAGUCHI, Hirohisa, Tsukuba, Ibaraki 305-0035 (JP)
(74) Representative: Zeller, Andreas
(86) International application number: PCT/US2005/005515
(87) International publication number: WO 2005/081416

(56) References cited:
- WO-A1-94/21071
- WO-A1-2004/001998
- US-A- 5 208 804
- US-A1- 2002 177 446
- US-A1- 2002 177 446
- US-A1- 2003 153 273
- US-B1- 6 240 274

## Description

### CROSS-REFERENCE TO RELATED APPLICATIONS

### STATEMENT REGARDING FEDERALLY SPONSORED RESEARCH OR DEVELOPMENT

Not applicable.

### REFERENCE TO A MICROFICHE APPENDIX

Not applicable.

### FIELD OF THE INVENTION

The present disclosure is directed to communications, and more particularly, but not by way of limitation, to a system and method for scalable, cooperative, wireless networking for mobile connectivity.

### BACKGROUND OF THE INVENTION

Integrated circuits or chips continue to increase in complexity and power. As feature sizes are reduced, more transistors and greater functionality can be provided by a constant sized chip. With reduced feature sizes, however, come other design challenges. With further reduction of feature size, power densities increase, and designs may make elaborate provisions to reduce and control heat sources within the chips. A strategy of employing reduced currents combined with turning off unused portions of the chip may be employed to reduce power dissipation. Along with reducing feature sizes, there is a trend to integrate more functions on a single chip, including analog and radio frequency functions, to increase system reliability and reduce costs.

The radio spectrum is a shared resource. One common approach to sharing the spectrum is to allocate portions of the spectrum to individual users, for example cell phone users, who may use all of their spectrum share according to various limits, including, for example, a maximum transmission power level. Radio interference may occur in various bands of the spectrum generated by various sources and may, to some extent, be transient and unpredictable. A strategy to minimize the impact of radio interference may be to communicate within a narrow frequency bandwidth to present a minimum exposure or a narrow cross-section to interference.

Orthogonal frequency division multiplexing (OFDM) is an encoding method employed in several wireless communication protocols, and other communication protocols may migrate to OFDM in the future. OFDM encodes digital data in a plurality of sub-channels using various modulation means including quadrature amplitude modulation (QAM). The sub-channel data is then processed by an inverse fast Fourier transform to combine the sub-channel data in a time domain signal that covers a frequency bandwidth substantially equivalent to the sum of the bandwidths or sub-channel spacing of each of the sub-channels. This time domain signal may then be transmitted. Receiving an OFDM signal is substantially a reflection of the transmission process. The time domain signal is processed by a fast Fourier transform to transform it into the frequency domain where the sub-channel data can be extracted and the QAM values decoded. The patent WO94/21071 discloses a method in which a wideband receive band is processed by dealing with multiple sub-bands in multiple receive chains. The requirements on the ADCs are reduced. Changing bandwidths or receive protocols can be accommodated. Alternatively, the sub-bands are separated in the digital section.

### SUMMARY OF THE INVENTION

The invention is as defined in the independent claims.

These and other features and advantages will be more clearly understood from the following detailed description taken in conjunction with the accompanying drawings and claims.

### BRIEF DESCRIPTION OF THE DRAWINGS

For a more complete understanding of the present disclosure and the advantages thereof, reference is now made to the following brief description, taken in connection with the accompanying drawings and detailed description, wherein like reference numerals represent like parts.
Figure 1 is a block diagram of a transceiver according to an embodiment of the present disclosure.
Figure 2a is a block diagram of a receiver analog section and a digital baseband component according to an embodiment of the present disclosure.
Figure 2b is a block diagram of a transmitter analog section and a digital baseband component according to an embodiment of the present disclosure.
Figure 3 is a block diagram of a fast Fourier transform component according to an embodiment of the present disclosure.
Figure 4a is a logic diagram of another method of using an embodiment of the present disclosure.
Figure 4b is a logic diagram of another method of configuring the analog section and the digital baseband component according to an embodiment of the present disclosure.
Figure 4c is a logic diagram of a method of receiving communications according to an embodiment of the present disclosure.
Figure 4d is a logic diagram of another method of using an embodiment of the present disclosure.
Figure 5 depicts a block diagram of a system on a chip suitable for implementing the several embodiments of the disclosure.

### DETAILED DESCRIPTION OF THE PREFERRED EMBODIMENTS

The communications transceiver disclosed herein may be composed of a plurality of analog sub-band sections, each analog sub-band section is operable to concurrently process a bandwidth portion, or sub-band, of the received and/or transmitted signal. This approach narrows the bandwidth over which any single analog sub-band section operates, and may relax the performance requirements on each analog sub-band section or specific individual components of each analog sub-band section. In an embodiment, a medium access control (MAC) component adapts the analog sub-band sections and an associated digital baseband component to operate in different bandwidths and according to different communication protocols, taking a step towards a universal wireless transceiver.

In another embodiment, the MAC component configures the analog sub-band sections and digital baseband component to use all of an unlicensed portion of spectrum, detects narrowband interferers within the portion of spectrum, and dynamically reconfigures the analog sub-band sections and digital baseband component to use all of the unlicensed portion of spectrum excluding the portion of the spectrum associated with the narrowband interferer. This approach to using spectrum may constitute a paradigm shift in wireless communications wherein instead of minimizing exposure to interference, interference is detected in real-time and the architecture of the transceiver promotes adapting around the interference in real-time.

In another embodiment, the analog section is conventional, and the digital baseband component processes a single input digital baseband signal received from the analog section as a plurality of sub-band input digital baseband signals to produce a single input bit stream for use by higher layer processes, such as the MAC component. The processing of the sub-band digital baseband signals by the digital baseband component may include shutting off the signal flow associated with one or more sub-band signals.

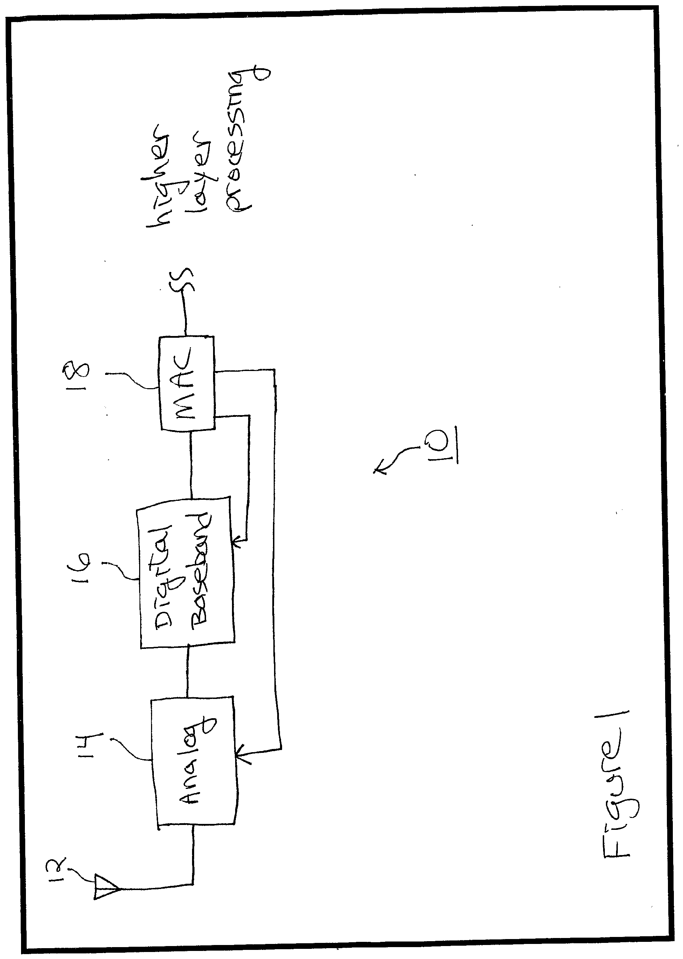

Turning now to Figure 1, a wireless transceiver 10 is depicted. The wireless transceiver 10 comprises at least one antenna 12, an analog section 14, a digital baseband component 16, and a medium access control (MAC) component 18. The MAC component 18 may also be referred to as a controller or a mediator. In some embodiments, for example an embodiment employing multiple-input multiple-output (MIMO) communication techniques, the antenna 12 may comprise multiple antennas. During a receiving operation, the antenna 12 transforms an input radio signal, for example a transmission from a wireless local area network (WLAN) access point (AP), to an input radio frequency (RF) signal. The input RF signal is processed by the analog section 14 to amplify the input RF signal, to down-convert the input RF signal to an input analog baseband signal, and to convert the input analog baseband signal to an input digital baseband signal. The analog section 14 provides the input digital baseband signal to the digital baseband component 16. The digital baseband component 16 processes the input digital baseband signal to extract an input communication bit stream, for example by decoding the input digital baseband signal. The digital baseband component 16 provides the input communication bit stream to the MAC component 18. The MAC component 18 processes the input communication bit stream to provide high level input data to higher layer processing. The MAC component 18 also adjusts and controls the analog section 14 and the digital baseband component 16 during the receive operation. In another embodiment, a separate controller or component, for example a physical layer controller, not shown, may adjust and/or control the analog section 14 and/or the digital baseband component 16. In this embodiment, the MAC component 18 may provide high-level commands to the physical layer controller, and the physical layer controller maps these high-level commands to specific adjustments and parameter changes in the analog section 14 and the digital baseband component 16.

A transmit operation is similar to the reverse of the receive operation. The MAC component 18 provides an output communication bit stream to the digital baseband component 16. The digital baseband component 16 encodes the output bit stream as an output digital baseband signal and provides the output digital baseband signal to the analog section 14. The analog section 14 converts the output digital baseband signal to an output analog baseband signal, up-converts the output analog baseband signal to an output RF signal, and amplifies the output RF signal. The analog section 14 provides the output RF signal to the antenna 12 which transforms the output RF signal into an output radio signal. As in the receive operation described above, the MAC component 18 also adjusts and controls the analog section 14 and the digital baseband component 16 during the transmit operation.

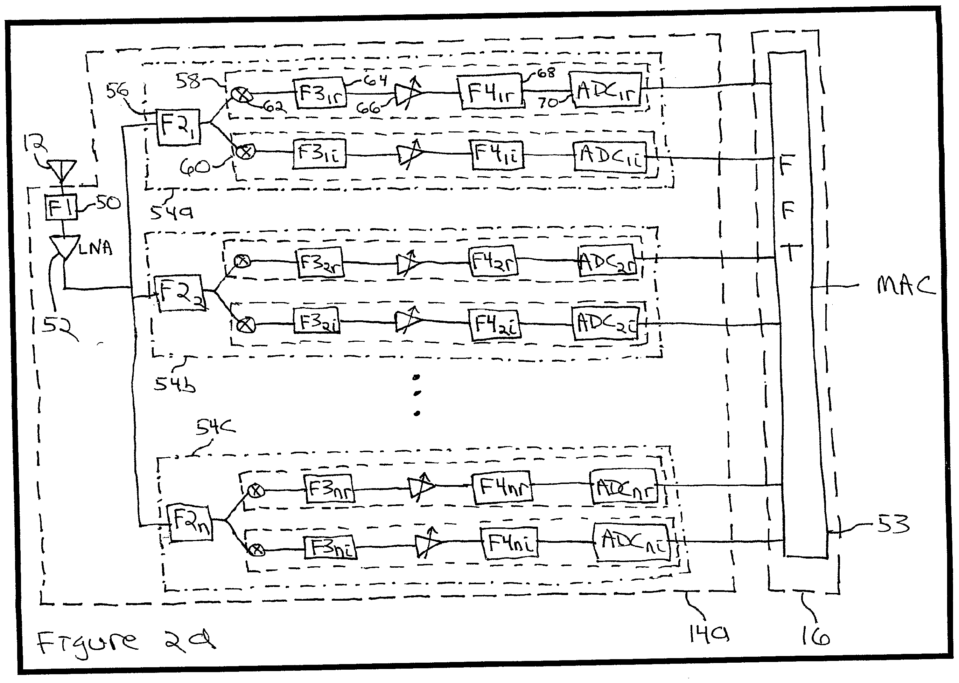

Turning now to Figure 2a, some details of a receiver analog section 14a and the digital baseband component 16 are depicted. In an embodiment, the receiver analog section 14a comprises a pre-select filter 50, a low noise amplifier 52, and a plurality of receiver sub-band analog sections 54, a first receiver sub-band analog section 54a, a second receiver sub-band analog section 54b, and a third receiver sub-band analog section 54c. In some contexts, the receiver sub-band analog sections 54 may be referred to as receiver sub-band sections or sub-band sections. It will be appreciated by one skilled in the art that in the case that multiple antennas 12 are employed to promote MIMO communication modes, additional pre-select filters 50 and low noise amplifiers 52 may be employed to support the additional antennas 12. The number of receiver sub-band analog sections 54 implemented in the receiver analog section 14a may range, for example, from 2 to 33,000 receiver sub-band analog sections 54. In a preferred embodiment, the number of receiver sub-band analog sections 54 implemented in the receiver analog section 14a may range from 5 to 200 receiver sub-band analog sections 54.

The digital baseband component 16 comprises a fast frequency transform component 53 and other components not shown, for example an encoder/decoder or a modulator/demodulator component. The pre-select filter 50 excludes out of band signals and noise. The low noise amplifier 52 boosts the input RF signal to a level useable by the receiver sub-band analog sections 54. In another embodiment, the receiver analog section 14a may be composed of other components.

Each receiver sub-band analog section 54 processes a portion of the input RF signal. For example, the receiver analog section 12 may be designed to operate over a maximum frequency bandwidth of 700 MHz and may comprise fourteen receiver sub-band analog sections 54. In an embodiment, each receiver sub-band analog section 54 may process a 50 MHz portion of the 700 MHz operating bandwidth. For example, the first receiver sub-band analog section 54a may process the input RF signal in the band 5.15 GHz to 5.2 GHz, the second receiver sub-band analog section 54b may process the input RF signal in the band 5.2 GHz to 5.25 GHz, and the third receiver sub-band analog section 54c may process the input RF signal in the band 5.8 GHz to 5.85 GHz. In some embodiments, the bandwidth processed by one or more of the receiver sub-band analog sections 54 may be different. For example, bandwidths of some receiver sub-band analog sections 54 having a higher center frequency may process a proportionally greater bandwidth of the input RF signal than other receiver sub-band analog sections 54 having a lower center frequency. In an embodiment, the bandwidth and center frequency of each receiver sub-band analog section 54 may be adjustable by the MAC component 18.

In an embodiment, each sub-band analog section 54 comprises a plurality of filters; mixers, and amplifiers. In an embodiment, each receiver sub-band analog section 54 comprises an RF filter 56 that splits the portion of the input RF signal into an in-phase portion and a quadrature portion. In some contexts, the in-phase portion of the input RF signal may be referred to as the real part and the quadrature portion of the input RF signal may be referred to as the imaginary part. The receiver sub-band analog section 54 further comprises a receiver in-phase processing path 58 and a receiver quadrature processing path 60. In an embodiment, each receiver in-phase processing path 58 and receiver quadrature processing path 60 includes a first mixer 62, a first filter 64, a variable gain amplifier (VGA) 66, a second filter 68, and an analog-to-digital converter (ADC) 70. In other embodiments, fewer or more filters may be employed. In other embodiments, some components may be shared between receiver sub-band analog sections 54, and the processing that is parallel and the processing that is shared may vary from one embodiment to another. The first mixer 62 down converts the input RF signal to the input analog baseband signal. The first filter 64 conditions the input analog baseband signal, for example excluding frequencies outside of the bandwidth of the receiver sub-band analog section 54. The VGA 66 boosts the input analog baseband signal above a noise floor, and the second filter further conditions the input analog baseband signal. The ADC 70 samples the input analog baseband signal at a periodic rate and converts the analog samples to the input digital baseband signal. In another embodiment, a single first stage mixer may down convert the input RF signal, and a plurality of second stage mixers may frequency shift the down converted input RF signal to center the signal frequency of interest to each receiver sub-band analog section 54. In an embodiment, one receiver sub-band analog section 54 may not require a second stage mixer, because the down conversion by the first stage mixer centers on direct current frequency the signal frequency of interest to that specific receiver sub-band analog section.

In an embodiment, the MAC component 18 may adjust the low noise amplifier 52. In an embodiment, the MAC component 18 may adjust the frequency characteristics of the RF filter 56, the first filter 64, and the second filter 68, for example the bandwidth, the center frequency, and/or the attenuation rate. In an embodiment, the MAC component 18 may adjust the first mixer 62 to down-convert from different RF frequencies to baseband. In an embodiment, the MAC component 18 may adjust the gain of the VGA 66. In an embodiment, the MAC component 18 may adjust the gains of the VGAs 66 of each receiver sub-band analog section 54 independently. In an embodiment, the MAC component 18 may adjust the ADC 70 to employ different bit resolutions and/or different sampling rates. In an embodiment, the MAC component 18 may adjust the current and/or voltage levels within the receiver analog section 14a to optimize signal-to-noise (SNR) and power management objectives. Any and all of these adjustments may be referred to as configuring or reconfiguring the receiver analog section 14a. Making these adjustments may also be referred to as adapting the receiver analog section 14a to operate in different bandwidths and according to different communication protocols. In another embodiment, the physical layer controller may adjust and/or adapt the receiver analog section 14a and the digital baseband component 16. In other embodiments, the receiver sub-band analog sections 54 may have fixed, non-adjustable operational characteristics.

In an embodiment, the MAC component 18 or the physical layer controller may selectively turn on and/or off power to the receiver sub-band analog sections 54, which may be referred to as configuring or reconfiguring the analog section 14. The MAC component 18 may communicate the on/off power selection to the analog section 14 using a communication mechanism, for example using a predefined communication protocol. This may also be referred to as adapting the analog section 14 to operate in different bandwidths and according to different communication protocols. For example, the MAC component 18 may configure the receiver analog section 14a to receive across all of the unlicensed-national information infrastructure (U-NII) band, receiving across the bandwidth 5.15 GHz to 5.35 GHz and across the bandwidth 5.47 GHz to 5.825 GHz. For example, fourteen receiver sub-band analog sections 54 may be configured on and off and having the bandwidths represented in the following table:

**Table 1. Exemplary Sub-band Analog Section Configuration.**

| **Sub-band** | **Bandwidth** | **On/off status** |
|---|---|---|
| 1 | 5.15 GHz to 5.20 GHz | ON |
| 2 | 5.20 GHz to 5.25 GHz | ON |
| 3 | 5.25 GHz to 5.30 GHz | ON |
| 4 | 5.30 GHz to 5.35 GHz | ON |
| 5 | 5.35 GHz to 5.40 GHz | OFF |
| 6 | 5.40 GHz to 5.47 GHz | OFF |
| 7 | 5.47 GHz to 5.52 GHz | ON |
| 8 | 5.52 GHz to 5.57 GHz | ON |
| 9 | 5.57 GHz to 5.62 GHz | ON |
| 10 | 5.62 GHz to 5.67 GHz | ON |
| 11 | 5.67 GHz to 5.72 GHz | ON |
| 12 | 5.72 GHz to 5.77 GHz | ON |
| 13 | 5.77 GHz to 5.825 GHz | ON |
| 14 | 5.825 GHz to 5.85 GHz | OFF |

Note that the MAC component 18 may adjust the center frequencies and the bandwidth of individual receiver sub-band analog sections 54 and the bandwidth of some receiver sub-band analog sections 54 may differ from the bandwidth of other receiver sub-band analog sections 54. The 5^{th} and 6^{th} receiver sub-band analog sections 54 are turned off because they are associated with frequencies excluded from the U-NII band, 5.35 GHz to 5.47 GHz. The 14^{th} receiver sub-band analog section 54 is turned off because it is associated with a frequency bandwidth outside of the U-NII band, 5.825 GHz to 5.85 GHz. In other embodiments, other configurations of receiver sub-band analog sections 54 may be employed to receive communications using the U-NII band, for example employing either fewer or more receiver sub-band analog sections 54 and/or employing different bandwidth allocations for each of the receiver sub-band analog sections 54.

In the example above, the MAC component 18 may detect a narrowband interferer having a bandwidth of 5 MHz from 5.635 GHz to 5.640 GHz and turn off the 10^{th} sub-band analog section 54, which has a bandwidth of 5.62 GHz to 5.67 GHz that includes the narrowband interferer. In association with reconfiguring the analog section 14, the MAC component 18 may reconfigure the digital baseband component 16, such as in the case of an orthogonal frequency division multiplex (OFDM) transceiver 10, to exclude the sub-channels associated with the bandwidth 5.62 GHz to 5.67 GHz. When the narrowband interferer drops, for example 4 *µ*S later, the MAC component 18 may turn the 10^{th} sub-band analog section 54 back on and reconfigure the digital baseband component 16 to restore the sub-channels associated with the bandwidth 5.62 GHz to 5.67 GHz. Those skilled in the art will readily appreciate that the flexible architecture of the analog section 14 described above may promote a large number of adaptive communications scenarios and that the described scenario is only exemplary.

The transceiver 10 may communicate with a peer communication device, for example a wireless device transmitting to the transceiver 10, to indicate that the transceiver 10 is shutting down or reconfiguring the bandwidth of specific receiver sub-band analog sections 54. Otherwise for example, the signals transmitted by the transmitter on sub-bands where the associated receiver sub-band analog section 54 has been shut-down would not be received causing potential communication errors.

In an embodiment, the low noise amplifier 52 is a part of the sub-band analog section 54, and hence the receiver analog section 14a comprises a plurality of low noise amplifiers 52. In this embodiment, the MAC component 18 may turn off a receiver sub-band analog section 54 when a narrowband interferer is present in the bandwidth associated with the receiver sub-band analog section 54, thereby saving power which would otherwise be wasted in amplifying unwanted narrowband interference. Not only is power saved, the difficulty of managing power dissipation for the transceiver is further thereby reduced.

The MAC component 18 or the physical layer controller may reconfigure the analog section 14 and the digital baseband component 16 to adapt the transceiver 10 to operate in different bandwidths and according to different communication protocols. In a preferred embodiment, the MAC component 18 adapts the transceiver 10 to operate in accordance with different OFDM based communication protocols, but in other embodiments the MAC 18 may adapt the transceiver 10 to non-OFDM based communication protocols. It is contemplated, for example, that the MAC 18 may adapt the transceiver 10 to operate in co-existence with IEEE-802.11, MultiBand OFDM Alliance special interest group physical layer, IEEE-802.16, IEEE-802.20, global system for mobile communications (GSM), wideband code division multiple access (W-CDMA), CDMA-2000. It is contemplated that the MAC 18 may adapt the transceiver 10 to interoperate with IEEE-802.11a/n and MultiBand OFDM Alliance special interest group physical layer.

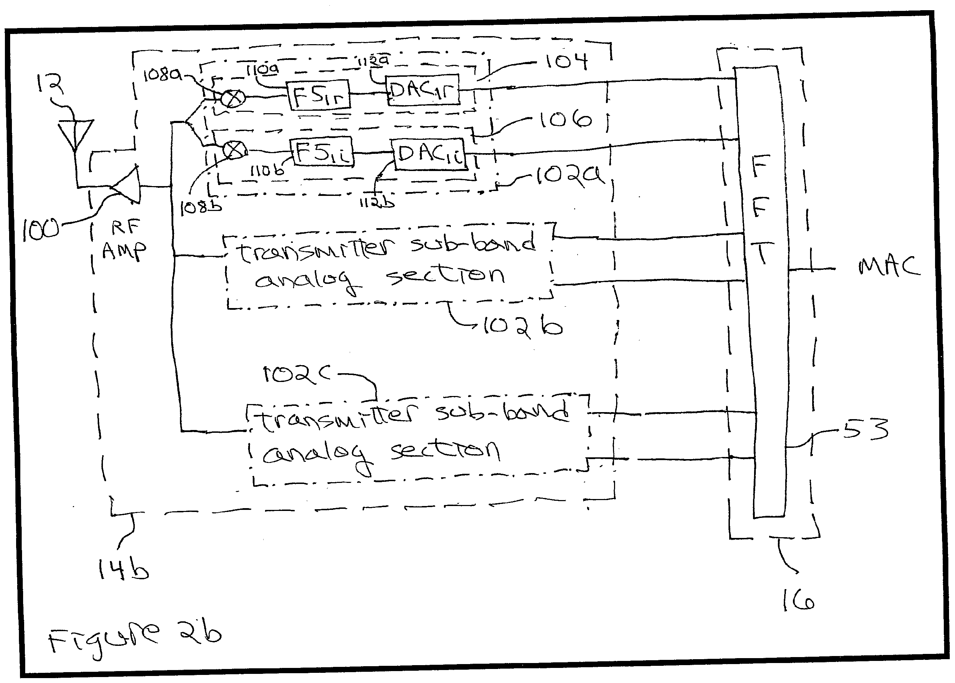

Turning now to Figure 2b, some details of a transmitter analog section 14b and the digital baseband component 16 are depicted. The transmitter analog section 14b comprises a RF amplifier 100 and a plurality of transmitter sub-band analog sections 102, for example a first transmitter sub-band analog section 102a, a second transmitter sub-band analog section 102b, and a third transmitter sub-band analog section 102c. In some contexts, the transmitter sub-band analog sections 102 may be referred to as transmitter sub-band sections or sub-band sections. The number of transmitter sub-band analog sections 102 implemented in the transmitter analog section 14b may range, for example, from 2 to 33,000 transmitter sub-band analog sections 102. In a preferred embodiment, the number of transmitter sub-band analog sections 102 implemented in the transmitter analog section 14b may range from 5 to 200 transmitter sub-band analog sections 102.

Each transmitter sub-band analog section 102 processes a portion of the output digital baseband signal and produces a portion of the output RF signal. Each transmitter sub-band analog section 102 comprises a transmitter in-phase processing path 104 and a transmitter quadrature processing path 106. In an embodiment, each transmitter in-phase processing path 104 and transmitter quadrature processing path 106 comprises a second mixer 108, one or more transmitter filters 110, and a digital-to-analog converter (DAC) 112. In an embodiment, each transmitter sub-band analog section 102 may have its own RF amplifier 100, in which case the transmitter analog section 14b comprises a plurality of RF amplifiers 100. In other embodiments, some components may be shared between transmitter sub-band analog sections 102, and the processing that is parallel and the processing that is shared may vary from one embodiment to another. The DAC 104 receives an output digital baseband signal from the digital baseband component 16 at a periodic rate and converts the output digital baseband signal to an output analog baseband signal. The transmitter filters 110 condition the output analog baseband signal. The second mixer 108 up-convertsthe output analog baseband signal to an output RF signal. The several output RF signals produced by the transmitter sub-band analog sections 102, for example the first transmitter sub-band analog section 102a, the second transmitter sub-band analog section 102b, and the third transmitter sub-band analog section 102c, are combined and then amplified by the RF amplifier 100 and then transmitted by the antenna 12. In an embodiment, portions of the receiver sub-band analog sections 54 and the transmitter sub-band analog sections 102 may be shared. For example, the first mixer 58 and the second mixer 108 may be implemented as a single component.

The MAC 18 or the physical layer controller may adjust, configure, and/or adapt the transmitter analog section 14b in a manner similar to that employed to adjust, configure, and/or adapt the receiver analog section 14a. In an embodiment having a plurality of RF amplifiers 100 as described above, the MAC component 18 or the physical layer controller may adjust the gains of the RF amplifiers 100 associated with each transmitter sub-band analog section 102 independently. In another embodiment, the transmitter analog section 14b may have fixed, non-adjustable operational characteristics. An operation mode of the transceiver 10 may include transmitting on one or more transmitter sub-band analog sections 102 while concurrently receiving on one or more non-interfering receiver sub-band analog sections 54.

The transceiver 10 may communicate with a peer communication device, for example a wireless device receiving the transmission of the transceiver 10, to indicate that the transceiver 10 is shutting down or reconfiguring the bandwidth of specific transmitter sub-band analog sections 102.

The above disclosed novel design of the analog section 14 promotes design flexibility. State-of-the art designs for wireless local area networks (WLAN) and digital television push the limits of ADC and DAC fabrication in that they may require, for example, a single ADC or DAC to convert 60 sub-channels distributed across 20 MHz. The analog section 14 disclosed above permits breaking the processing into a plurality of sub-bands, and may reduce the performance requirements of the ADC and DAC components in the transceiver 10. This flexibility may reduce unit costs or provide an avenue to improve another performance aspect. In an embodiment, using a wide bandwidth, for example all of the U-NII band, at a low bit rate per sub-channel may relax the low thermal noise level design requirement. Other performance requirements for the sub-band analog sections may be relaxed as a result of reducing the operating bandwidth of each individual sub-band analog section.

With reference now to Figure 1, during receive operations, the digital baseband component 16 processes the input digital baseband signal to extract the input communication bit stream by decoding the input digital baseband signal and provides the input communication bit stream to the MAC component 18. During transmit operations, the digital baseband component 16 receives the output communication bit stream from the MAC component 18, encodes the output communication bit stream, generates the output digital baseband signal, and provides the output digital baseband signal to the transmitter analog section 14b. Some of the communication modes supported by the transceiver 10 employ OFDM. OFDM communication employs OFDM symbols comprised of multiple sub-channels of encoded data. The sub-channel data may be encoded by the modulator/demodulator as QAM values, where an amplitude and a phase together represent the encoded data. The number of bits encoded in a single QAM character or value may be increased, thereby increasing the data throughput per sub-channel, by employing increasingly complex amplitude and phase mappings, called constellations. More complex constellations are referred to as higher order constellations or higher constellations. Employing higher constellations may entail use of higher transmission power when transmitting and increased currents when receiving to achieve sufficient signal-to-noise ratios.

In an embodiment, the MAC component 18 or the physical layer controller may adjust a first sub-band analog section to have higher gains than the gains of a second sub-band analog section, for example the gains associated with the VGAs 66 and the RF amplifiers 100. The MAC component 18 or the physical layer controller may conformably adjust the modulator/demodulator to employ more complex or higher order QAM constellations on the sub-channels associated with the first sub-band analog section and to employ less complex or lower order QAM constellations on the sub-channels associated with the second sub-band analog section. The MAC component 18 may differentially adjust the several sub-band analog sections and the modulator/demodulator in response to an analysis of the radio environment.

When transmitting an OFDM symbol, the OFDM sub-channel encoded by the modulator/demodulator is processed by an inverse fast Fourier transform component to transform the OFDM sub-channel sequence into the time domain for transmitting by the analog section 14. When receiving an OFDM symbol, the receiver digital signal is processed by a fast Fourier transform component to transform the receiver digital signal into the frequency domain where individual sub-channels may be accessed and their data decoded by the modulator/demodulator into a bit stream.

In an embodiment, the MAC component 18 or the physical layer controller may configure, reconfigure, adjust, and/or adapt the digital baseband component 16 to promote communications according to different protocols or in changing wireless environments. For example, the MAC component 18 or the physical layer controller may enable or disable specific sub-channels within a range of OFDM sub-channels. The MAC component 18 pr the physical layer controller may configure the sub-channel constellation sizes or a sub-channel bit count.

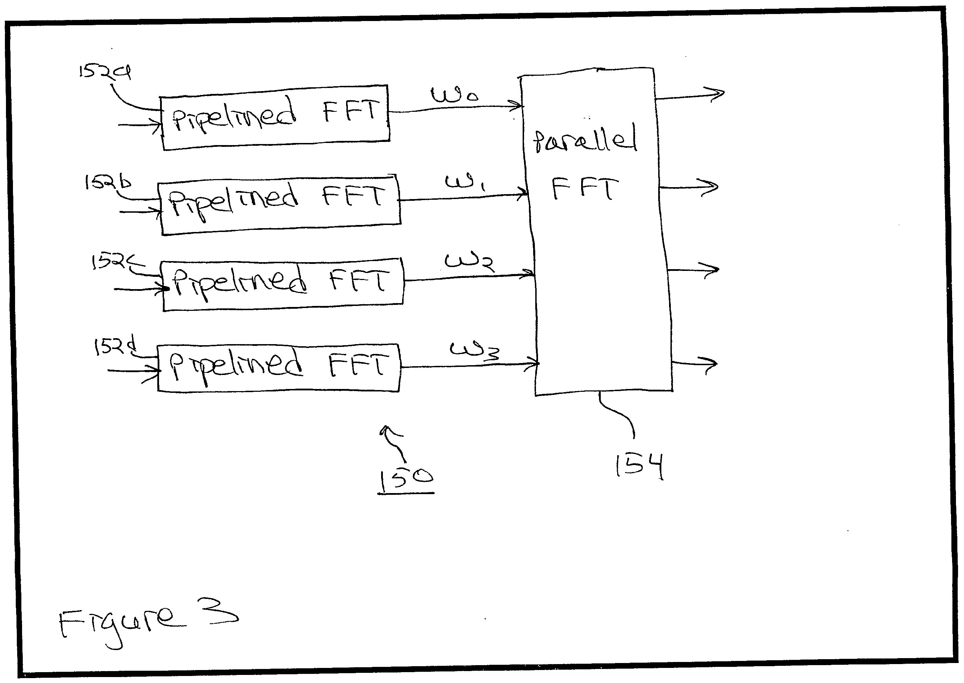

Turning now to Figure 3, a block diagram depicts a fast Fourier transform (FFT) component 150. The FFT component 150 comprises a plurality of pipelined FFTs 152 that feed their outputs to a combining parallel FFT 154. In an embodiment, a 256-point FFT may be implemented by using four pipelined FFTs 152, each of which is a pipelined radix-2² 64-point FFT, and wherein the combining parallel FFT 154 is a parallel radix-2 4-point FFT. In another embodiment, each pipelined FFT 152 is a pipelined radix-2 64 point FFT. In another embodiment, there are eight pipelined FFTs 152, each pipelined FFT 152 is a pipelined radix-2 32 point FFT, and the combining parallel FFT 154 is a parallel radix-2 8 point FFT.

The FFT component 150 may be employed to perform fast Fourier transforms as well as inverse fast Fourier transforms. As known to one skilled in the art, the inverse fast Fourier transform may be generated using a FFT structure, for example the FFT component 150, by swapping the real and imaginary inputs to the structure and swapping the real and imaginary outputs from the structure. Alternately, the inverse fast Fourier transform may be generated using a FFT structure, for example the FFT component 150, by changing the inputs to their complex conjugate before providing them to the structure and by changing the outputs from the structure to their complex conjugate before using these outputs. In a preferred embodiment, the fast frequency transform 53 depicted in Figures 2a and 2b may be implemented using the FFT component 150 with appropriate input and output signal conditioning employed to realize the inverse Fourier transform, as discussed above.

The fast Fourier transform (FFT) component 150 may be adjusted, configured, or adapted by the MAC component 18 or the physical layer controller to promote communications according to different protocols or in changing wireless environments. For example, in an embodiment, the MAC component 18 or the physical layer controller may turn on or off the pipelined FFTs 152 to enable different communication modes and/or to adapt to changed transceiver bandwidth. In another embodiment, the MAC component 18 or the physical layer controller may reduce the clocking rate of the FFT component 150 to meet reduced bandwidth requirements and thereby reduce power consumption. In an embodiment, the FFT component 150 is designed for a super set of the communications modes that the transceiver is designed to support. In a preferred embodiment, the FFT component 150 is employed for both receive and transmit operations, but in another embodiment two separate FFT components 150 may be used. Additional information related to FFT components is disclosed in U.S. Patent Application Serial No. 10/780,003, entitled "Architecture and Method for Performing a Fast Fourier Transform and OFDM Receiver Employing the Same," by Manish Goel, filed February 17, 2004,.

In another embodiment, the FFT component 150 may be implemented as a core reconfigurable by writing to registers, similar to the programming of a field programmable gate array (FPGA). The MAC component 18 or the physical layer controller may load a vector of configuration data into the FFT component 150 when reconfiguring the FFT component 150 to promote a different communication mode.

The MAC component 18 may promote cognitive wireless communication or cognitive radio by making decisions about what communication mode is preferable to achieve the communications needs of higher layer applications. The MAC component 18 may choose to communicate using different communication protocols, for example IEEE-802.11n and MultiBand OFDM Alliance special interest group physical layer, in different radio or electromagnetic environments and to dynamically reconfigure the analog section 14 and the digital baseband component 16 to communicate in accordance with the preferred communication protocol. The radio environment or electromagnetic environment refers to the signal content and noise content of a radio spectrum of interest. The radio environment may have multipath characteristics, propagation characteristics, and various interference sources that influence the ability to communicate in the radio environment. The MAC component 18 or the physical layer controller may dynamically reconfigure the analog section 14 and digital baseband component 16 to operate in various MIMO modes. Additional information related to MAC components is disclosed in U.S. Patent No. 6,810,520, entitled "Programmable Multi-Standard MAC Architecture," by Xiaolin Lu, et al, filed December 15, 2000, and U.S. Patent No. 6,839,345, entitled "MAC/PHY Interface," by Xiaolin Lu, et al, filed December 15, 2000,

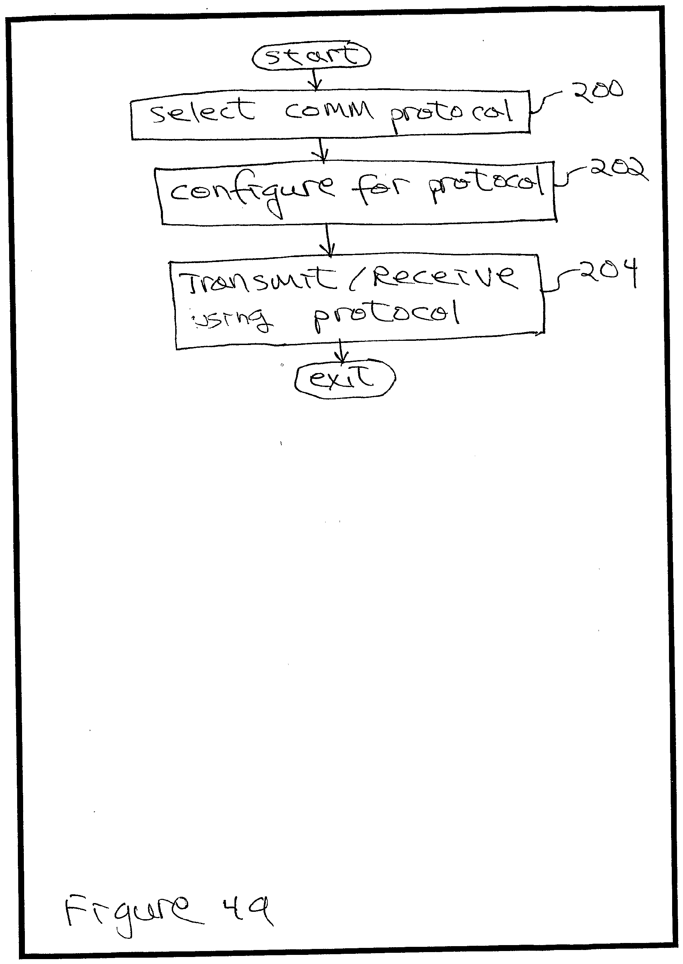

Turning now to Figure 4a, a logic diagram depicts a method for wirelessly communicating using the transceiver 10 disclosed above. The process begins in block 200 where a communication protocol is selected. The MAC component 18 may select the communication protocol and operation modes based on preferences of higher layer applications, for example desired data throughput, and/or current radio environment conditions. For example, the MAC component 18 may chose a particular MIMO mode based on analyzing the current radio environment. In some embodiments, the communication protocol may be pre-selected and built into the transceiver 10. In some embodiments, it may be possible for a user of a higher layer application to input a preferred communication protocol which is passed to the MAC component 18, thereby selecting the communication protocol.

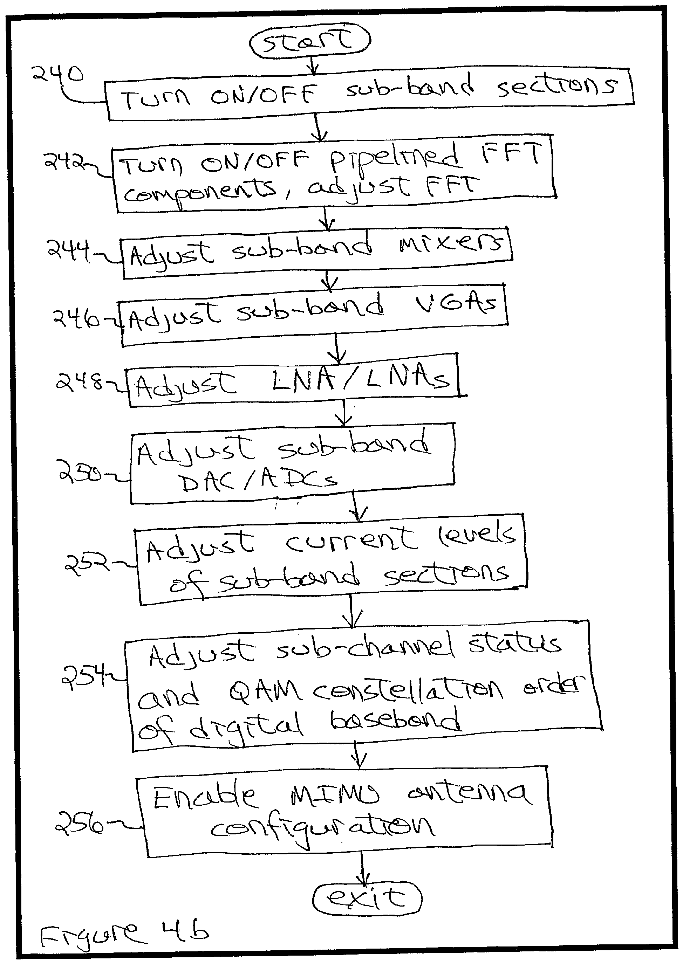

The method proceeds to block 202 where the analog section 14 and the digital baseband component 16 are configured by the MAC 18 or the physical layer controller. Details of the process of configuring the analog section 14 and the digital baseband component 16 are described in further detail with respect to Figure 4b below. In the case that the communication protocol is pre-selected and built into the transceiver 10, the analog section 14 and the digital baseband component 16 may not be configurable. In this embodiment, the transceiver 10 may be used as a plug-and-play replacement for a standard protocol transceiver, with the objective of obtaining one or more of the advantages of the unique architecture of transceiver 10, for example relaxed performance requirements of one or more components in the transmit/receive paths due to the reduced processing bandwidth of any sub-band analog section.

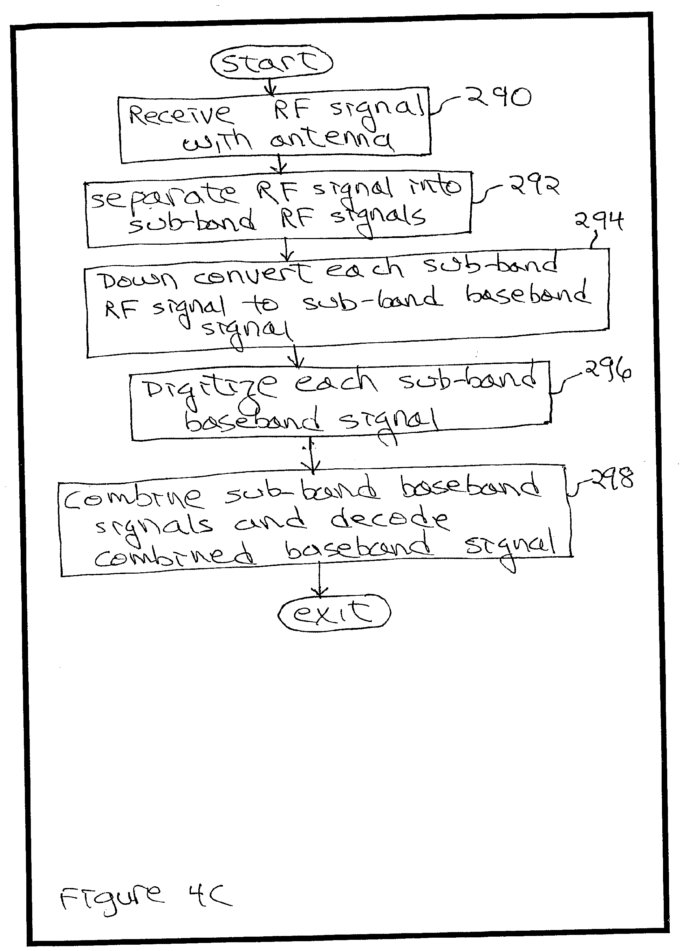

The method proceeds to block 204 where the transceiver transmits and/or receives using the selected protocol. In general, the transmit operation is carried out as a plurality of concurrent and parallel transmit operations involving multiple transmit sub-band analog sections 102. Similarly, in general, the receive operation is carried out as a plurality of concurrent and parallel receive operations involving multiple receive sub-band analog sections 54. The receive and transmit processes are described in more detail with reference to Figure 4c below. After the desired transmit and receive operations are completed, the process exits.

Turning now to Figure 4b, a logic diagram depicts a method of configuring and/or adjusting the analog section 14 and the digital baseband component 16 to promote wireless communication using the transceiver 10 disclosed above. The process begins in block 240 where the MAC component 18 or the physical layer controller turns on some and may turn off other receiver sub-band analog sections 54 and some transmit sub-band analog sections 102. The MAC component 18 or the physical layer controller may turn off sub-band analog sections 54, 102 to avoid narrowband interferers, as described above, or because the selected protocol does not operate in the frequency bandwidth associated with the turned off sub-band analog sections 54, 102.

The process proceeds to block 242 where the MAC component 18 or the physical layer controller turns on some and may turn off other pipelined FFT components 152. The MAC component 18 may turn off pipelined FFT components 152 because processing speed requirements do not necessitate using the turned off pipelined FFT components 152 or because the sub-band analog sections 54, 102 otherwise associated with the turned off pipelined FFT components 152 are also turned off.

The process proceeds to block 244 where the MAC component 18 adjusts the first and second mixers 62, 108. The adjusting may involve setting values in control registers associated with the first and second mixers 62, 108. The adjusting may involve setting a center frequency, a bandwidth, and/or other parameters of the first or second mixer 62, 108. Adjusting the first and second mixers may involve adjusting a voltage controlled oscillator (VCO) input to the first and second mixers. In an embodiment, the MAC component 18 may omit to adjust first and second mixers 62, 108 associated with receiver sub-band analog sections 54 and transmitter sub-band analog sections 102 that are turned off.

The process proceeds to block 246 where the MAC component 18 adjusts the VGAs 66 of the receive sub-band analog sections 54. The adjusting may involve setting values in control registers associated with the VGAs 66. The adjusting may involve setting the gain and other parameters of the VGAs 66. In an embodiment, the MAC component 18 may omit to adjust the VGAs 66 associated with receiver sub-band analog sections 54 that are turned off.

The process proceeds to block 248 where the MAC component 18 adjusts the low noise amplifier 52. In an embodiment where each receiver sub-channel analog section 54 has a low noise amplifier 52, the MAC component 18 adjusts each of the low noise amplifiers 52 and the MAC component 18 may omit to adjust low noise amplifiers 52 associated with receiver sub-band analog sections 54 that are turned off. The adjusting may involve setting values in control registers associated with the low noise amplifier 52. The adjusting may involve setting the gain and other parameters of the low noise amplifier 52.

The process proceeds to block 250 where the MAC component 18 adjusts the DACs 112 and the ADCs 70. The adjusting may involve setting values in control registers associated with the DACs 112 and/or the ADCs 70. The adjusting may involve setting conversion periods, sampling rates, resolutions, and other parameters. In an embodiment, he MAC component 18 may adjust the sampling rates of the DACs 112 and the ADCs 70 using decimation, for example dividing through a maximum rate sampling clock signal to derive reduced rates. In another embodiment, the MAC component 18 may indirectly adjust the sampling rates of the DACs 112 and the ADCs 70 by adjusting the frequency output of voltage controlled oscillators (VCOs) that control the sampling rates. The VCO method of controlling may consume less power than the decimation method of controlling the sampling rates of the DACs 112 and the ADCs 70. In an embodiment, the MAC component 18 may omit to adjust the DACs 112 and the ADCs 70 associated with receiver sub-band analog sections 54 and transmitter sub-band analog sections 102 that are turned off.

The process proceeds to block 252 where the MAC component 18 adjusts the current levels of the receiver sub-band analog sections 54 and the transmitter sub-band analog sections 102. The adjusting may involve setting values in control registers associated with the receiver sub-band analog sections 54 and the transmitter sub-band analog sections 102. In an embodiment, the MAC component 18 may omit to adjust current levels of the receiver sub-band analog sections 54 and the transmitter sub-band analog sections 102 that are turned off.

The process proceeds to block 254 where the MAC component 18 adjusts the sub-channel status and QAM constellation size or order in the digital baseband component 16. The adjusting may involve setting values in control registers associated with the sub-channel status and QAM constellation size or order.

The process proceeds to block 256 where the MAC component 18 enables an appropriate MIMO antenna configuration. The process then exits.

In some embodiments, not all of these process blocks are employed. For example, in an embodiment, current levels in the receiver sub-band analog sections 54 and the transmitter sub-band analog sections 102 may not be adjustable and block 252 may be omitted. Additionally, during some configuration operations only some of the process blocks may be performed.

Turning now to Figure 4c, a logic diagram depicts a method of receiving a wireless or RF signal using the transceiver 10 disclosed above. The process begins in block 290 where the antenna 12 transforms the radio wave into the input RF signal. The input RF signal may be filtered by the pre-select filter 50 and then amplified by the low noise amplifier 52.

The process proceeds to block 292 where the input RF signal is separated into a plurality of sub-band RF signals by a filter 56, a bank of filters 56, or by some other means known to those skilled in the art. The sub-band RF signals may comprise an in-phase or real component and a quadrature or imaginary component. In an embodiment, sub-band RF signals associated with a receiver sub-band analog section 54 that are turned off by the MAC component 18 may not be separated but are simply ignored.

The process proceeds to block 294 where each sub-band RF signal is down converted by the mixer 58 to the input analog baseband signal. The input baseband signal may be conditioned by the first and second filters 64, 68 and amplified by the VGA 66. No processing of sub-band RF signals is performed by receiver sub-band analog sections 54 that are turned off by the MAC component 18.

The process proceeds to block 296 where the input baseband signal is sampled periodically and converted to a digital baseband signal by the ADC 70.

The process proceeds to block 298 where the input baseband signals of each of the powered receiver sub-channel analog sections 54 are combined and decoded by the digital baseband component 16. In an embodiment where OFDM symbols are employed for the communication, the digital baseband component 16 processes the input combined digital baseband signal in a fast Fourier transform component 150 to access sub-channel data. The digital baseband component 16 further decodes the sub-channel data to obtain the input communication bit stream. The process exits.

The process for transmitting is substantially similar to the process for receiving depicted in Figure 4c performed in reverse.

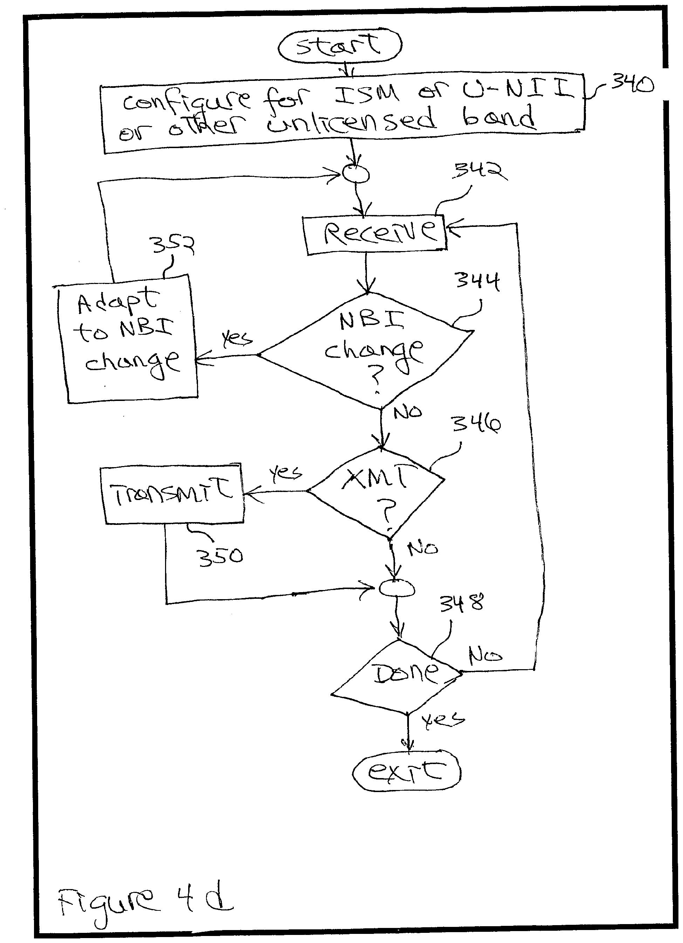

Turning now to Figure 4d, a logic diagram depicts a method of wirelessly communicating using the transceiver 10 disclosed above. The process begins in block 340 where the MAC component 18 configures the analog section 14 and the digital baseband component 16 for ISM, U-NII, or other unlicensed band communications operation. The process proceeds to block 342 where the transceiver 10 receives across the entire subject communication band.

The process proceeds to block 344 where if a narrowband interferer (NBI) has been detected or a previously identified NBI is no longer detected, the process proceeds to block 352, otherwise the process proceeds to block 346. In block 346 if the transceiver 10 wants to transmit, the process proceeds to block 350, otherwise the process proceeds to block 348. In block 350 the transceiver 10 transmits as described above. The process proceeds to block 348. In block 348 if the transceiver 10 is done communicating the process exits, otherwise the process returns to block 342.

In block 352 the MAC component 18 determines the frequency range of the NBI and adapts the analog section 14 and the digital baseband component 16 to communicate in the presence of the NBI. The MAC component 18 may turn off the receiver and transmitter sub-band analog sections 54, 102 associated with the NBI. Alternately, the MAC component 18 may adjust the upper frequency limit of one receiver and transmitter sub-band analog section 54, 102 and adjust the lower frequency limit of another receiver and transmitter sub-band analog sections 54, 102 so as to avoid operating in the frequency range of the NBI. After the MAC component 18 adapts the analog section 14 and the digital baseband component 16 to the NBI change, the process returns to block 342.

In another embodiment, in block 342 the MAC component 18 may analyze the radio environment and determine to adjust a first sub-band analog section to have higher gains than the gains of a second sub-band analog section, for example the gains associated with the VGAs 66 and the RF amplifiers 100. The MAC component 18 may conformably adjust the modulator/demodulator to employ more complex or higher order QAM constellations on the sub-channels associated with the first sub-band analog section and to employ less complex or lower order QAM constellations on the sub-channels associated with the second sub-band analog section. The process returns to block 342.

In another embodiment, the analog section 14 is conventional, and the digital baseband component 16 processes a single input digital baseband signal received from the analog section as a plurality of sub-band input digital baseband signals to produce a single input bit stream for use by higher layer processes, such as the MAC component 18. The processing of the sub-band digital baseband signals by the digital baseband component 16 may include shutting off the signal flow associated with one or more sub-band signals. In this embodiment, the digital baseband component 16 is configurable by the MAC component 18 or the physical layer controller to select active sub-bands, whereby to reject channel interference or noise, for example a narrowband interferer. The digital baseband component 16 separates the input digital baseband signal into sub-band input digital base band signals using digital filters. The digital baseband component 16 may exclude transmission in frequency ranges by not transmitting on the associated sub-channels of the OFDM symbol.

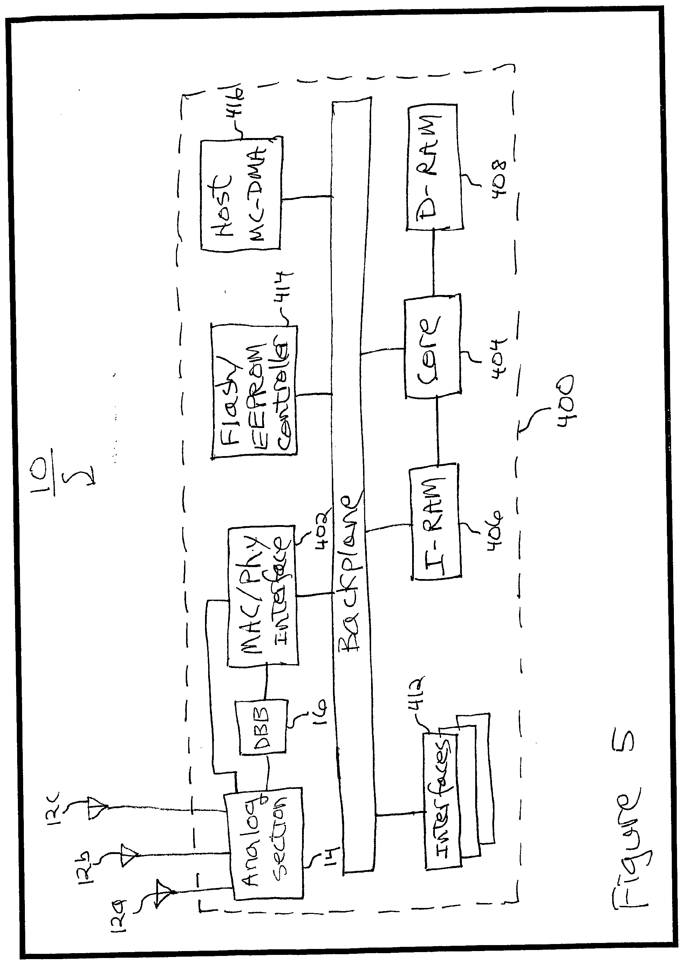

The transceiver 10 described above may be implemented as a system on a chip or as a circuit board comprising several semiconductor chips coupled to each other. The antenna 12 may be integrated with the chip or the circuit board or may be a separate component. Figure 5 illustrates one embodiment of the transceiver 10 as a system on a chip 400. The chip 400 comprises an analog section 14, a digital baseband component 16, a MAC/PHY interface 402 between a core processor 404 and the digital baseband 16 and the analog section 14. The chip 400 also comprises the core processor 404. The core processor 404, in association with an instruction random access memory (I-RAM) 406 and a data random access memory (D-RAM) 408, provides the processing functionality of the MAC component 18 described above. The chip 400 includes a backplane 410, a plurality of interfaces 412, a Flash/EEPROM controller 414, and a host MC-DMA component 416. The backplane 410 promotes communication among the several components. The interfaces 412 provide connectivity to other devices to the core 404 via the backplane 410, for example a universal serial bus interface. The Flash/EEPROM controller 414 communicates with the core processor 404 via the backplane 410 and provides support functions for interacting with Flash and EEPROM memory devices. The host MC-DMA component 416 provides support for direct memory access operations. In an embodiment, an arbiter component mediates access to the backplane between the D-RAM 408 and the core processor 404. In an embodiment, extended core features provide encryption capabilities at least partly enabled by user defined instructions.

## Claims

1. A wireless transceiver, comprising:
a configurable analog component operable to receive an input radio frequency signal; and
a controller portion operable to determine the frequency range of a narrowband interferer and to promote adjustment of a bandwidth of the configurable analog component from at least a first bandwidth to a second bandwidth, and
the configurable analog component is operable to transmit the output radio frequency signal, and the configurable analog component comprises a plurality of sub-band sections, each sub-band section operable to process a portion of a radio spectrum; and
wherein the controller is operable to change an upper bandwidth limit of a first sub-band section and change a lower bandwidth limit of a second sub-band section so as to avoid operating in the frequency range of the narrowband interferer, the bandwidth of the first sub-band section located at a lower frequency range than the bandwidth of the second sub-band section.

2. The wireless transceiver of claim 1, wherein the controller portion is further defined as a medium access control component, and the medium access control component adjusts the configurable analog component based on a selected communication protocol.

3. The wireless transceiver of Claim 2, wherein the communication protocol selected from the group consisting of an IEEE-802.11 communication protocol, an MultiBand OFDM Alliance special interest group physical layer communication protocol, an IEEE-802.16 communication protocol, an IEEE-802.20 communication protocol, a global mobile system for mobile communication protocol, a wideband code division multiple access communication protocol, and a code division multiple access 2000 communication protocol.

4. The wireless transceiver of Claim 2, the communication protocol associated with an unlicensed spectrum band, wherein the medium access control component detects a narrowband interferer, determines the bandwidth of the narrowband interferer, and adjusts the configurable analog component to exclude the bandwidth of the narrowband interferer from the radio spectrum that the analog component employs to receive the input radio frequency signal and to transmit the output radio frequency signal.

5. A wireless receiver, comprising:
an analog section operable to receive an input radio frequency signal and to convert the input radio frequency signal to an input digital baseband signal;
a configurable digital baseband component operable to receive the input digital baseband signal from the analog section, to separate the input digital baseband signal into one or more input sub-band digital signals based on a sub-band configuration, to selectively process each of the input sub-band digital signals to produce a plurality of input demodulated sub-band digital signals, to combine the input demodulated sub-band digital signals as an input bit stream; and
a controller portion operable to promote adjustment of the sub-band configuration and to receive the input bit stream from the configurable digital baseband component, said controller portion operable to change an upper bandwidth limit of a first sub-band section and change a lower bandwidth limit of a second sub-band section, the bandwidth of the first sub-band section located at a lower frequency range than the bandwidth of the second sub-band section.

## Patentansprüche

1. Drahtloser Sendeempfänger, der Folgendes umfasst:
eine auslegbare analoge Komponente, die betreibbar ist, ein Funkfrequenzeingangssignal zu empfangen; und
einen Steuerungsabschnitt, der betreibbar ist, den Frequenzbereich eines Schmalbandstörers zu bestimmen und eine Anpassung einer Bandbreite der auslegbaren analogen Komponente von mindestens einer ersten Bandbreite auf eine zweite Bandbreite zu fördern, und
die auslegbare analoge Komponente ist betreibbar, das Funkfrequenzausgangssignal zu übertragen, und die auslegbare analoge Komponente umfasst eine Vielzahl von Unterbandregionen, wobei jede Unterbandregion betreibbar ist, einen Abschnitt des Funkspektrums zu verarbeiten; und
wobei die Steuerung betreibbar ist, eine obere Bandbreitengrenze der ersten Unterbandregion und eine untere Bandbreitengrenze einer zweiten Unterbandregion derart zu ändern, dass das Betreiben im Frequenzbereich des Schmalbandstörers vermieden wird, wobei sich die Bandbreite der ersten Unterbandregion in einem niedrigeren Frequenzbereich befindet als die Bandbreite der zweiten Unterbandregion.

2. Drahtloser Sendeempfänger nach Anspruch 1, wobei der Steuerungsabschnitt ferner als eine Medienzugriffssteuerkomponente definiert ist und die Medienzugriffssteuerkomponente die auslegbare analoge Komponente auf Basis eines ausgewählten Kommunikationsprotokolls anpasst.

3. Drahtloser Sendeempfänger nach Anspruch 2, wobei das Kommunikationsprotokoll aus der Gruppe bestehend aus einem IEEE-802.11-Kommunikationsprotokoll, einem Kommunikationsprotokoll der physischen Schicht der MultiBand OFDM Alliance Special Interest Group, einem IEEE-802.16-Kommunikationsprotokoll, einem IEEE-802.20-Kommunikationsprotokoll, einem Protokoll des globalen mobilen Systems für mobile Kommunikation, einem Code Division Multiple Access-Breitbandkommunikationsprotokoll und einem Code Division Multiple Access 2000-Kommunikationsprotokoll ausgewählt ist.

4. Drahtloser Sendeempfänger nach Anspruch 2, wobei das Kommunikationsprotokoll mit einem nicht lizenzierten Spektrumband verknüpft ist, wobei die Medienzugriffssteuerkomponente einen Schmalbandstörer detektiert, die Bandbreite des Schmalbandstörers bestimmt und die auslegbare analoge Komponente derart anpasst, dass die Bandbreite des Schmalbandstörers aus dem Funkspektrum, das von der analogen Komponente genutzt wird, um das Funkfrequenzeingangssignal zu empfangen und das Funkfrequenzausgangssignal zu übertragen, ausgeschlossen wird.

5. Drahtloser Empfänger, der Folgendes umfasst:
eine analoge Region, die betreibbar ist, ein Funkfrequenzeingangssignal zu empfangen und das Funkfrequenzeingangssignal in ein digitales Basisbandeingangssignal umzuwandeln;
eine auslegbare digitale Basisbandkomponente, die betreibbar ist, das digitale Basisbandeingangssignal von der analogen Region zu empfangen, das digitale Basisbandeingangssignal auf Basis einer Unterbandauslegung in ein oder mehrere digitale Unterbandeingangssignale zu trennen, jedes der digitalen Unterbandeingangssignale selektiv zu verarbeiten, um eine Vielzahl von demodulierten digitalen Unterbandeingangssignalen zu produzieren, die demodulierten digitalen Unterbandeingangssignale als einen Eingangsbitstrom zu kombinieren; und
einen Steuerungsabschnitt, der betreibbar ist, eine Anpassung der Unterbandauslegung zu fördern und den Eingangsbitstrom von der auslegbaren digitalen Basisbandkomponente zu empfangen, wobei der Steuerungsabschnitt betreibbar ist, eine obere Bandbreitengrenze der ersten Unterbandregion und eine untere Bandbreitengrenze einer zweiten Unterbandregion zu ändern,
wobei sich die Bandbreite der ersten Unterbandregion in einem niedrigeren Frequenzbereich befindet als die Bandbreite der zweiten Unterbandregion.

## Revendications

1. Émetteur-récepteur sans fil, comprenant :
un composant analogique configurable, permettant de recevoir un signal radioélectrique d'entrée ; et
une partie contrôleur, permettant de déterminer la plage de fréquences d'un brouilleur en bande étroite et de favoriser le réglage d'une bande passante du composant analogique configurable d'au moins une première bande passante à une seconde bande passante,
le composant analogique configurable permet d'émettre le signal radioélectrique de sortie, et le composant analogique configurable comprend une pluralité de sections de sous-bande, chaque section de sous-bande permettant de traiter une partie d'un spectre radio ; et
le contrôleur permettant de changer une limite haute de bande passante d'une première section de sous-bande et de changer une limite basse de bande passante d'une seconde section de sous-bande de manière à éviter un fonctionnement dans la plage de fréquences du brouilleur en bande étroite, la bande passante de la première section de sous-bande étant située au niveau d'une plage de fréquences inférieure à la bande passante de la seconde section de sous-bande.

2. Émetteur-récepteur sans fil selon la revendication 1, dans lequel la partie contrôleur est en outre définie comme un composant de contrôle d'accès au support, et le composant de contrôle d'accès au support règle le composant analogique configurable sur la base d'un protocole de communication sélectionné.

3. Émetteur-récepteur sans fil selon la revendication 2, dans lequel le protocole de communication est sélectionné dans le groupe constitué d'un protocole de communication IEEE-802.11, d'un protocole de communication de couche physique de groupe d'intérêt spécial de la MultiBand OFDM Alliance, d'un protocole de communication IEEE-802.16, d'un protocole de communication IEEE-802.20, d'un protocole de communication pour système mondial de communications mobiles, d'un protocole de communication d'accès multiple par répartition en code à large bande et d'un protocole de communication d'accès multiple par répartition en code 2000.

4. Émetteur-récepteur sans fil selon la revendication 2, le protocole de communication étant associé à une bande spectrale sans licence, et dans lequel le composant de contrôle d'accès au support détecte un brouilleur en bande étroite, détermine la bande passante du brouilleur en bande étroite et règle le composant analogique configurable pour exclure la bande passante du brouilleur en bande étroite du spectre radio que le composant analogique emploie pour recevoir le signal radioélectrique d'entrée et pour émettre le signal radioélectrique de sortie.

5. Récepteur sans fil, comprenant :
une section analogique, permettant de recevoir un signal radioélectrique d'entrée et de convertir le signal radioélectrique d'entrée en un signal numérique d'entrée en bande de base ;
un composant numérique configurable en bande de base, permettant de recevoir le signal numérique d'entrée en bande de base en provenance de la section analogique, de séparer le signal numérique d'entrée en bande de base en un ou plusieurs signaux numériques d'entrée en sous-bande sur la base d'une configuration de sous-bande, de traiter de manière sélective chacun des signaux numériques d'entrée en sous-bande pour produire une pluralité de signaux numériques d'entrée en sous-bande démodulés, et de combiner les signaux numériques d'entrée en sous-bande démodulés comme un flux binaire d'entrée ; et
une partie contrôleur, permettant de favoriser le réglage de la configuration de sous-bande et de recevoir le flux binaire d'entrée en provenance du composant numérique configurable en bande de base, ladite partie contrôleur permettant de changer une limite haute de bande passante d'une première section de sous-bande et de changer une limite basse de bande passante d'une seconde section de sous-bande, la bande passante de la première section de sous-bande étant située au niveau d'une plage de fréquences inférieure à la bande passante de la seconde section de sous-bande.
